Europäisches Patentamt

European Patent Office

Office européen des brevets

(19)

(11) Veröffentlichungsnummer : **0 047 904**
**B1**

(12) **EUROPÄISCHE PATENTSCHRIFT**

(45) Veröffentlichungstag der Patentschrift :
07.11.84

(21) Anmeldenummer : 81106759.4

(22) Anmeldetag : 29.08.81

(51) Int. Cl.³ : **G 11 B 15/29, G 11 B 15/43**

(54) **Magnetbandlaufwerk nach dem Kontaktwickelprinzip.**

(30) Priorität : 17.09.80 DE 3034989

(43) Veröffentlichungstag der Anmeldung :
24.03.82 Patentblatt 82/12

(45) Bekanntmachung des Hinweises auf die Patenterteilung : 07.11.84 Patentblatt 84/45

(84) Benannte Vertragsstaaten :
**AT DE FR GB**

(56) Entgegenhaltungen :
DE-A- 2 914 293
DE-A- 3 043 235
US-A- 3 370 804
US-A- 3 482 800
US-A- 4 018 402
US-A- 4 074 873
US-A- 4 093 150

(73) Patentinhaber : **BASF Aktiengesellschaft**
**Carl-Bosch-Strasse 38**
**D-6700 Ludwigshafen (DE)**

(72) Erfinder : **Gliniorz, Lothar**
**Carl-Bosch-Ring 24**
**D-6710 Frankenthal (DE)**
Erfinder : **Dobler, Peter**
**Don-Carlos-Strasse 17**
**D-6700 Ludwigshafen (DE)**
Erfinder : **Schoettle, Klaus**
**Ladenburger Strasse 70**
**D-6900 Heidelberg (DE)**

## Beschreibung

### Gebiet der Erfindung

Die Erfindung betrifft ein Magnetbandlaufwerk nach dem Kontaktwickelprinzip, im wesentlichen bestehend aus einem Rahmen, einem Band abgebenden Abwickel und einem Band aufnehmenden Aufwickel sowie zumindest einem kreisförmigen, rotierenden Antriebsorgan für den gleichzeitigen Antrieb beider Wickel durch Kontaktdruck an je einer Kontaktstelle am Umfang jedes Wickels, wobei Antriebsorgan und Wickel auf Drehachsen gelagert und die Drehachsen der Wickel gegenüber der ortsfesten Welle des Antriebsorgans bewegbar angeordnet sind, und wobei ein Kontaktdruck an den Kontaktstellen der Wickel mit dem Antriebsorgan erzeugt wird, sowie je einer jedem Wickel zugeordneten Bremsvorrichtung, die den jeweiligen Abwickel bremst und damit die Bandspannung zwischen der Wickeln erzeugt.

### Stand der Technik

Mit der DE-OS-24 36 008 ist ein Laufwerk für Magnetbandgeräte bekannt, bei dem drehrichtungsabhängige Freilaufkupplungen und jeder Drehachse zugeordnete, ortsfeste Federandruckbremsen vorgesehen sind. Das Herstellen und Einstellen der Freilaufkupplungen und der Federandruckbremsen ist dabei zu aufwendig.

Es ist auch mit der DE-PS-15 24 946 eine Bandtransportvorrichtung bekannt, bei der einstellbare Reibelemente auf Drehachsen und Führungsstangen wirken und dadurch der Verschiebebewegungen der Zufuhr- und Aufnahmewickelrolle selbsttätig in dem Sinne entgegenwirken, daß abhängig von der jeweiligen Bandwickeldrehrichtung ein unterschiedlicher Berührungsdruck zwischen der Antriebsrolle und der Zufuhr- und Aufnahmewickelrolle eingestellt wird.

Um ein wiederholbares Funktionieren dieser bekannten Vorrichtung sicherzustellen, ist es notwendig, die Reibverhältnisse an den Führungsstangen sehr konstant zu halten, was kaum realisierbar ist, wenn ein solches Bandgerät für den Heimgebrauch gedacht ist. Dabei treten durch besagte Reibelemente und auftretende Kraftmomente nicht vernachlässigbare Energieverluste auf. Es ist weiterhin bekannt für einen Bandtransport DE-OS-28 25 112 eine Bremsvorrichtung bestehend aus zwei Federn, zwei Bremsschnüren und zwei Hebeln sowie vier Anschlägen zu benutzen, um Ein-Richtungs-Freilaufkupplungen einzusparen und die Freilauf- und Bremsfunktionen auf beiden Seiten der Treibrolle unmittelbar beim Reversieren selbsttätig einzustellen. Die Einstellung der Anschläge ist problematisch, die Gesamtfunktion der Bremsvorrichtung ist zeitabhängig und der Energiebedarf eines solchen Transports ist zu hoch.

### Aufgabenstellung der Erfindung

Es ist daher Aufgabe der vorliegenden Erfindung, ein möglichst einfaches Laufwerk mit einem nicht aufwendig herstellbaren und leicht einbau- und auswechselbaren, dabei jedoch zuverlässigen Brems-/ Freilaufsystem bereitzustellen.

### Lösung gemäß vorliegender Erfindung

Die Aufgabe wird mit einem Magnetbandlaufwerk nach dem Kontaktwickelprinzip entsprechend dem Oberbegriff des Anspruchs 1 dadurch gelöst, daß jede Bremsvorrichtung aus mindestens drei miteinander verbundenen Hebeln besteht, die die jeweilige Drehachse des Wickels übergreifen, und daß zwei der mindestens dreittebel auslenkbar sind, deren zwei Enden über ein die Drehachse des Wickels umschlingendes Bremsseil verbunden sind, und daß die Bremsvorrichtung die Kraftübertragung in Abhängigkeit von der jeweiligen Drehrichtung des Wickels selbsttätig so einstellt, daß an einer Seite der Drehachse die der Seilumschlingung entsprechende Reibkraft und an der anderen seite der Drehachse eine kleinere als die Reibkraft auftreten ; so daß die Drehachse des Aufwickels relativ frei läuft und die Drehachse des Abwickels gebremst wird.

Das erfindungsgemäße Laufwerk hat den Vorteil des geringstmöglichen Verschleißes und einer erheblichen Energieersparnis, so daß eine Verwendung des Laufwerks in portablen Geräten insbesondere auf dem Heimgerätemarkt interessant wird.

In praktischer Ausgestaltung können die mindestens drei verbundenen Hebel an zwei beweglichen Gelenkpunkten gelenkig miteinander verbunden sein, von denen die auslenkbaren Seitenhebel je einen festen Drehpunkt besitzen und ein Zwischenhebel die Seitenhebel verbindet. Dadurch wird eine einfache Herstellung des Bremssystems erreicht. In vorteilhafter Dimensionierung des Laufwerks kann die Lage der beweglichen Gelenkpunkte gegenüber den Drehpunkten so gewählt sein, daß die Übersetzung der Hebelauslenkungen vorzugsweise etwas größer als 1 ist, und generell im Bereich von etwa 1,0 bis 2,5 liegt. Dadurch wird mit einem äußerst geringen Hebelauslenkungsunterschied eine relativ große Wirkung erreicht, nämlich auf einer Seite des Laufwerks der Freilauf und auf der anderen Seite der Bremseffekt. Zweckmäßig kann jeder Hebelvorrichtung eine Zug- oder Druckfeder zugeordnet sein, deren Kraft gleichzeitig die Mindestreibkraft an der zugehörigen Drehachse bestimmt. Damit wird primär die notwendige Vorspannung der Bremsvorrichtung aufgebracht, so daß keine zusätzliche Unterstützung der Hebel notwendig ist. Die Zug- oder Druckfedern können für jede Seite des Laufwerks eine individuelle Größe haben, um Reibunterschiede der Materialien usw. auszugleichen.

Es kann weiter auch zwischen den beiden Hebelvorrichtungen eine gemeinsame Zugfeder vorgesehen sein. Prinzipiell können die Hebel etwa H-förmig angeordnet sein, und die festen Drehpunkte können an zwei nebeneinanderliegenden freien Enden der Auslenkbaren seitenhebel vorgesehen sein.

Es kann auch vorteilhaft sein, daß die Hebel etwa U-förmig angeordnet sind und die festen Drehpunkte etwa auf einer horizontalen Achse oder an einem Eckpunkt des U und einem diagonal gegenüberliegenden Schenkelende vorgesehen sind.

Einzelheiten der Erfindung werden nachfolgend anhand in der Zeichnung dargestellten Ausführungsbeispielen beschrieben.

## Inhalt der Zeichnung

Die Zeichung zeigt in
Figur 1 ein Laufwerk mit etwa H-förmiger Hebel-Bremsvorrichtung.
Figuren 2 und 3  weitere Laufwerke mit U-förmigen Hebel-Bremsvorrichtungen.
Figur 4 eine Schemaskizze der Hebel-Bremsvorrichtung gemäß Fig. 1 mit Kräften und Hebelauslenkungen.

## Beschreibung von Lösungsbeispielen

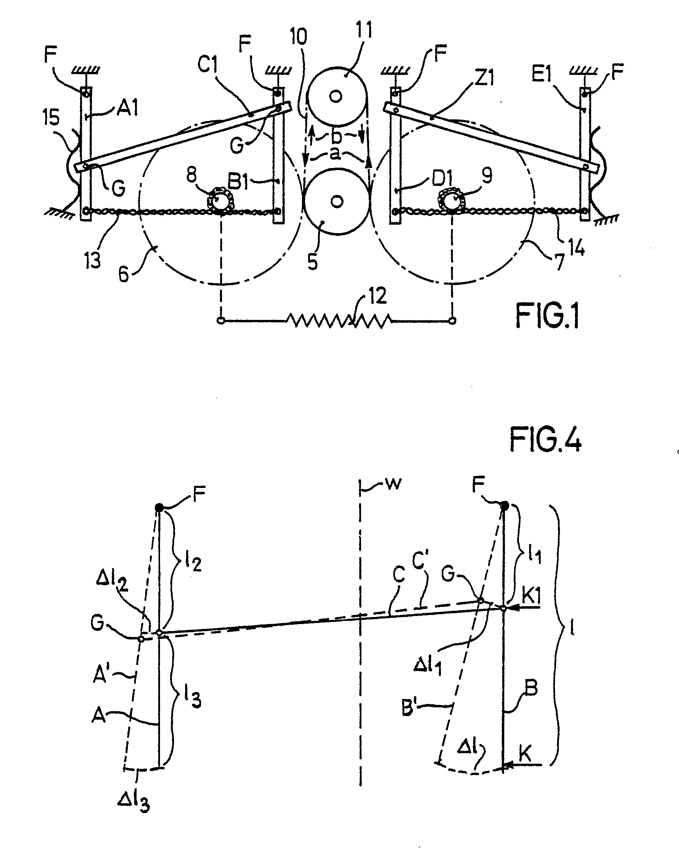

In den Figuren 1 bis 3, die beispielsweise die Laufwerke von unten gesehen zeigen können, sind dieselben Teile mit denselben Bezugszeichen gekennzeichnet.

Als Antriebsorgan dient eine Antriebsrolle 5 für die Wickel 6 und 7, deren Drehachsen 8 bzw. 9 mittels der Feder 12 gegen den Umfang der Antriebsrolle 5 angedrückt werden. Das Band 10 läuft je nach Transportrichtung gemäß den Pfeilen a oder b, von der Antriebsrolle 5 kommend um eine Bandführungsrolle 11 herum und auf den anderen Bandwickel, den Aufwickel.

Eine Bremsvorrichtung gemäß der Erfindung besteht aus den gleichlangen Seitenhebeln A1 und B1 und dem Zwischenhebel C1. An den oberen Enden der Seitenhebel A1 und B1 sind Festpunkte F vorgesehen, um die die Seitenhebel A1 und B1 bei Krafteinwirkung schwenkbar bzw. auslenkbar sind. Die unteren Enden der H-Hebelvorrichtung sind verbunden, wobei das Bremsseil 13 dazwischen die Drehachse 8 voll umschlingt. An den beweglichen, d. h. nicht ortsfesten Gelenkpunkten G sind die Seitenhebel A1 und B1 an den Enden des Zwischenhebels C1 gelenkig befestigt. Eine Druckfeder 15 hält die Hebelvorrichtung A1, B1, C1 unter Vorspannung, so daß eine freitragende Bauweise möglich ist. Die bisherige Beschreibung bezieht sich auf die linke Bremsvorrichtung. Die Anordnung und Ausbildung der rechten Bremsanordnung ist jedoch bezüglich der Verbindungslinie der Rollen 5 und 11 symmetrisch, so daß eine nochmalige Beschreibung überflüssig ist. Die Hebel sind zur Unterscheidung mit d1 und E1 und Z1 bezeichnet und das Seil hat die Ziffer 14.

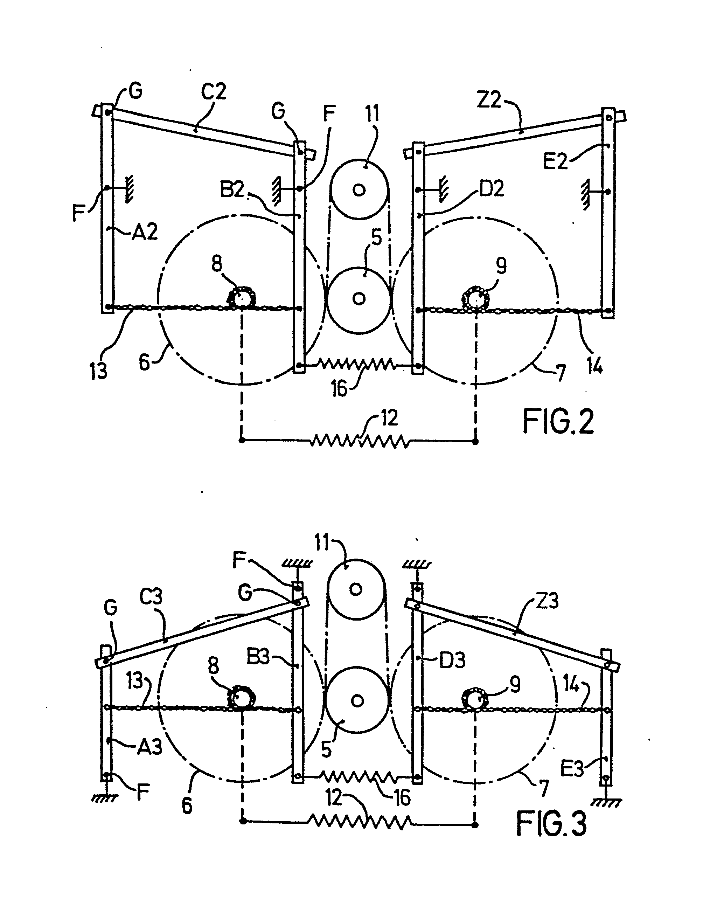

In Figuren 2 und 3 bestehen die Hebelvorrichtungen aus Hebeln A2, B2, C2 bzw. A3, B3, C3 (links) sowie D2, E2, Z2 bzw. D3, E3, Z3 (rechts). Unterschiedlich zur Hebelvorrichtung in Figur 1 ist die etwa U-Form der Hebel, die verschiedene Länge der Seitenhebel A und B bzw. D und E, die andere Anordnung der Festpunkte, sowie die gemeinsame Vorspannungsfeder 16, die die Hebel B2 und D2 bzw. B3 und D3 miteinander verbindet.

Die prinzipielle Funktion der Hebelvorrichtungen soll nachfolgend anhand des Schema-Beispieles in Figur 4 erläutert werden, wobei Figur 4 in abstrakter Weise die Hebelvorrichtung gemäß Figur 1 zeigt.

Die aufgrund der Reibung z. B. an Drehachse 8 auftretende Kraftkomponente K greift rechts unten am Hebel B an und verursacht eine Auslenkung um den Weg $\Delta l$. In der Zeichnung sind mit A', B', C' die ausgelenkten Positionen der Hebel A, B, C bezeichnet, die gestrichelt dargestellt sind. Am Gelenkpunkt G wird eine kleinere Kraft $K_1$ wirksam, die praktisch die Auslenkung $\Delta l_1$ verursacht. Die Längen $l$ und $l_1$ sind gegeben.

Wird angenommen, daß das Moment $K \cdot l \geq K_1 l_1$ ist, ergibt

sich für

$$K_1 \leq K(l/l_1) \tag{1}$$

Die Auslenkungen $l_1$ und $l$ müssen der Beziehung genügen

$$(\Delta l/l) = (\Delta l_1/l_1) \text{ woraus } \Delta l_1 = (l_1/l) \Delta l \tag{2}$$

folgt.

Die Kraft $K_1$ wird über den Zwischenhebel C auch am Gelenkpunkt G mit dem Seitenhebel A wirksam, so daß eine Auslenkung

$$\Delta l_2 = \Delta l_1 \tag{3}$$

verursacht wird.

Umgeformt mit den Beziehungen

$$(\Delta l_2/\Delta l_3) = (l_2/l) \tag{4}$$

und (2) und (3) ergibt sich bei gegebenen Längen für l und $l_1$, $l_2$, $l_3$ die maximale Auslenkung am freien Ende des Hebels A :

$$\Delta l_3 = (l_1/l_2) \, \Delta l \tag{5}$$

Mit Längenwerten : $l_2 = l_3 = 1/2$ ; $l_1 = 1/3$ (1. Beispiel) bzw. $l_1 = (2/5)$ l (2. Beispiel) ergibt sich $\Delta l_3 = 2/3 \, \Delta l$ (1. Beispiel) bzw. $\Delta l_{3'} = 4/5 \, \Delta l$ (2. Beispiel) und ein Übersetzungsfaktor $\ddot{U} = \Delta l/\Delta l_3$ zu $\ddot{U} = 1,5$ (1. Beispiel) bzw. $\ddot{U}' = 1,25$ (2. Beispiel).

Es ist offensichtlich, daß die Auslenkung $\Delta l_3$ des Hebels A kleiner ist als die Auslenkung $\Delta l$ des Hebels B, und daß der Übersetzungsfaktor unmittelbar von den gewählten Längenwerten der Anordnung abhängt.

Theoretisch ist jede Übersetzung größer als 1 möglich. Begrenzt werden die praktischen Werte durch die Elastizität des Bremsseilmaterials. Es hat sich für die Erfindung als günstig erwiesen, einen Übersetzungsfaktor möglichst unter 2,5 einzustellen, um die Verlustleistung möglichst gering zu halten. Wie auch die oben gewählten Längenwerte zeigen, liegt der Bereich des Übersetzungsfaktors etwa zwischen 1,0 und 2,5, und der Vorzugsbereich praktisch etwa zwischen 1,1 und 1,5, also bei Werten etwas größer als 1,0.

Praktisch wird bei vorstehender Dimensionierung erreicht, daß rechts und links der Linie w, die die Lage der Drehachse 8 des Bandwickels 6 symbolisiert, unterschiedliche Auslenkungen der Hebel B und A auf das Seil 13 wirken. In der Folge, da die Auslenkung $\Delta l$ des Hebels B größer als die Auslenkung $\Delta l_3$ des Hebels A ist, wird das Seil an der Drehachse 8 gelockert und damit die wirksame Reibkraft verringert, so daß bei der vorgegebenen Drehrichtung eine Freilauffunktion des Bandwickels 6 erhalten wird.

Folgerichtig tritt rechts am Laufwerk eine Bremsfunktion auf, da Hebel D1 mehr nach links ausgelenkt wird ($\Delta l$) als Hebel E1 nachgezogen wird ($\Delta l_3$) und somit wird eine größere Reibkraft auf die Drehachse 9 ausgeübt, wodurch der Abwickel 7 gebremst wird.

Bezüglich der durch die gemeinsame Andruckfeder 12 erzeugten Andruckkräfte an den Kontaktstellen wird zwischen Aufwickel 6 und Antriebsrolle 5 eine größere Andruckkraft wirksam als zwischen dem Abwickel 7 und der Antriebsrolle 5, da die Reibkraft an der Drehachse 9 der Kraft der Feder 12 entgegengerichtet ist und somit die Andruckkraft verringert wird. Damit werden bei Benutzung eines elastischen Umfangsrandes an der Antriebsrolle Masseflußkräfte im elastischen Material wirksam, die auf die Wickel wirken und dadurch den Bandzug im Laufwerk noch zusätzlich erhöhen.

Abgesehen von diesem speziellen Fall ist die Bremsvorrichtung allgemein für Laufwerke mit bandförmigen Aufzeichnungsträgern verwendbar, wobei unterschiedliche, allein von der Drehrichtung abhängige Bremskräfte erzeugt werden sollen. So ist es durch individuelle Anordnung und Dimensionierung möglich, auch völlig unterschiedliche Bremsverhältnisse durch unsymmetrische Anordnung jedes der Hebelsysteme zur Verbindungslinie der Rollen 5 und 11 zu realisieren, was z. B. bei einem Ein-Richtungs-Laufwerk anwendbar ist. Es ist auch möglich, nicht nur die bei Bandlauf auftretenden Kräfte, sondern äußere, auch separat erzeugte Kräfte — für die Funktionssteuerung über ein erfindungsgemäßes Hebelsystem zu verwenden.

### Ansprüche

1. Magnetbandlaufwerk nach dem Kontaktwickelprinzip, im wesentlichen bestehend aus einem Rahmen, einem Band abgebenden Abwickel (6) und einem Band aufnehmenden Aufwickel (7) sowie zumindest einem kreisförmigen, rotierenden Antriebsorgan (5) für den gleichzeitigen Antrieb beider Wickel (6 und 7) durch Kontaktdruck an je einer Kontaktstelle am Umfang jedes Wickels, wobei Antriebsorgan und Wickel auf Drehachsen (8, 9) gelagert und die Drehachsen der Wickel gegenüber der ortsfesten Welle des Antriebsorgans (5) bewegbar angeordnet sind, und wobei ein Kontaktdruck an den Kontaktstellen der Wickel mit dem Antriebsorgan erzeugt wird, sowie je einer jedem Wickel zugeordneten Bremsvorrichtung, die den jeweiligen Abwickel bremst und damit die Bandspannung zwischen den Wickeln erzeugt, dadurch gekennzeichnet, daß jede Bremsvorrichtung aus mindestens drei miteinander verbundenen, Hebeln (A, B, C bzw. D, E, Z) besteht, die die jeweilige Drehachse (8 bzw. 9) des Wickels (6 bzw. 7) übergreifen, und daß zwei (A, B bzw. D, E) der mindestens dreiHebel auslenkbar sind deren zwei Enden über ein die Drehachse des Wickels umschlingendes Bremsseil (13 bzw. 14) verbunden sind, und daß die Bremsvorrichtung die Kraftübertragung in Abhängigkeit von der jeweiligen Drehrichtung des Wickels (6, 7) selbsttätig so einstellt, daß an einer Seite der Drehachse (8 bzw. 9) die der Seilumschlingung entsprechende Reibkraft und an der anderen Seite der Drehachse eine kleinere als die

4

Reibkraft auftreten, so daß die Drehachse (9) des Aufwickels (7) relativ frei läuft und die Drehachse (8) des Abwickels (6) gebremst wird.

2. Laufwerk nach Anspruch 1, dadurch gekennzeichnet, daß die mindestens drei verbundenen Hebel (A, B, C bzw. D, E, Z) an zwei beweglichen Gelenkpunkten (G) gelenkig miteinander verbunden sind, von denen die auslenkbaren Seitenhebel (A, B bzw. D, E) je einen festen Drehpunkt (F) besitzen und ein Zwischenhebel (C u. Z) die Seitenhebel verbindet.

3. Laufwerk nach Anspruch 2, dadurch gekennzeichnet, daß die Lage der beweglichen Gelenkpunkte (G) gegenüber den festen Drehpunkten (F) so gewählt ist, daß die Übersetzung der Hebelauslenkungen etwa im Bereich von 1,0 bis 2,5 liegt und vorzugsweise etwas größer als 1 ist.

4. Laufwerk nach einem der Ansprüche 1 bis 3, dadurch gekennzeichnet, daß jeder Hebelvorrichtung (A, B, C bzw. D, E, Z) eine Zug- oder Druckfeder (16, 15) zugeordnet ist, deren Kraft die Mindestreibkraft an der zugehörigen Drehachse (8 bzw. 9) bestimmt.

5. Laufwerk nach einem der Ansprüche 1 bis 3, dadurch gekennzeichnet, daß zwischen den beiden Hebelvorrichtungen (A, B, C bzw. D, E, Z) eine gemeinsame Zugfeder (16) vorgesehen ist, deren Kraft die Mindestreibkraft an der zugehörigen Drehachse (8 bzw. 9) bestimmt.

6. Laufwerk nach Anspruch 2, dadurch gekennzeichnet, daß die Hebel (A, B, C bzw. D, E, Z) etwa H-förmig angeordnet sind (Fig. 1, Fig. 4) und die festen Drehpunkte (F) an zwei nebeneinanderliegenden, freien Enden der auslenkbaren Seitenhebel (A, B bzw. D, E) vorgesehen sind.

7. Laufwerk nach Anspruch 2, dadurch gekennzeichnet, daß die Hebel etwa U-förmig angeordnet sind und die festen Drehpunkte (F) etwa auf einer horizontalen Achse (Fig. 2) oder an einem Eckpunkt des U und einem diagonal gegenüberliegenden Schenkelende eines Seitenhebels (Fig. 3) vorgesehen sind.

## Claims

1. A magnetic tape transport apparatus consisting essentially of a frame ; a supply and a take-up reel (6 and 7) ; at least one annular rotating drive member (5) for simultaneously driving both reels (6 and 7) by surface engagement thereof with the periphery of each reel at one point of contact, the drive member and reels being mounted on axles (8, 9) and the axles of the reels being movable relative to the fixed axle of the drive member (5), and compressive forces being applied at the points of contact of the reels with the drive member ; and a braking device, allotted to each reel, which brakes whichever reel is serving as the supply reel, thus generating tension in the span of tape between the reels, wherein the braking devices each comprise at least three levers (A, B, C ; D, E, Z) which are connected to one another and surround the axle (8, 9) of the reel (6, 7) in spatial relationship thereto ; two (A, B ; D, E) of the at least three levers are pivotable ; the ends of each pair of levers are connected by a braking cable (13, 14) which is wound around the axle of the reel ; and each braking device automatically adjusts the transmission of force, depending on the momentary direction of rotation of the reel (6, 7), in such a way that at the axle (8 or 9 as the case may be) supporting the supply reel the frictional force produced by the cable wrap becomes effective and at the axle supporting the take-up reel the frictional force is less, as a result of which the axle (9) of the take-up reel (7) runs relatively freely whilst the axle (8) of the supply reel (6) is braked.

2. A tape transport apparatus as claimed in claim 1, wherein the at least three interconnected levers (A, B, C ; D, E, Z) are hingedly connected together at two movable pivot points (G), the pivotable lateral levers (A, B ; D, E) each having its own fixed fulcrum point (F), and a lever (C, Z) interconnecting the lateral levers.

3. A tape transport apparatus as claimed in claim 1, wherein the locations of the movable pivot points (G) relative to the fixed fulcrum points (F) are so chosen that the transmission ratio determined by the difference in the lever deflections is from about 1,0 to 2,5, preferably somewhat higher than 1.

4. A tape transport apparatus as claimed in any of claims 1 to 3, wherein a tension or compression spring (16, 15) is allotted to each braking device (A, B, C ; D, E, Z), and the force of the spring determines the minimum frictional force applied at the axle (8 or 9) to which the braking device is allocated.

5. A tape transport apparatus as claimed in any of claims 1 to 3, wherein a common tension spring (16) is provided between the two braking devices (A, B, C ; D, E, Z), and the force of the spring determines the minimum frictional force applied at the axle (8 or 9) to which the braking device is allocated.

6. A tape transport apparatus as claimed in claim 2, wherein the levers (A, B, C ; D, E, Z) are arranged roughly in the shape of an H (Fig. 1, Fig. 4) and the fixed fulcrum points (F) are located at the adjacent free ends of the pairs of pivotable lateral levers (A, B ; D, E).

7. A tape transport apparatus as claimed in claim 2, wherein the levers are in a roughly U-shaped arrangement, and the fixed fulcrum points (F) are located approximately on a horizontal axis (Fig. 2) or at an end of the base of the U and a diagonally opposite end of a lateral lever (Fig. 3).

## Revendications

1. Mécanisme d'entraînement de bande magnétique selon le principe de l'enroulement par contact,

**0 047 904**

constitué essentiellement d'un bâti, d'un rouleau dérouleur (6) libérant une bande et un rouleau enrouleur (7) recevant une bande, ainsi qu'au moins un organe d'entraînement (5) rotatif circulaire pour l'entraînement simultané des deux rouleaux (6 et 7) par pression de contact sur une zone de contact à la périphérie de chaque rouleau, organe d'entraînement et rouleaux étant montés sur des axes de rotation (8, 9) et les axes de rotation des rouleaux étant déplaçables par rapport à l'arbre fixe de l'organe d'entraînement (5), et une pression de contact étant créée aux zones de contact des rouleaux avec l'organe d'entraînement, ainsi qu'un dispositif de freinage, associé à chaque rouleau, qui freine le rouleau dérouleur respectif et produit donc la tension de la bande entre les rouleaux, caractérisé par le fait que chaque dispositif de freinage est constitué par au moins trois leviers (A, B, C ou D, E, Z) reliés entre eux, qui recouvrent respectivement les axes de rotation (8 ou 9) des rouleaux (6 ou 7) et que deux (A, B ou D, E) des au moins trois leviers sont déviables et leurs extrémités sont reliées par un câble de frein (13 ou 14) s'enroulant autour de l'axe de rotation du rouleau, et que le dispositif de freinage règle automatiquement la transmission de force en fonction du sens de rotation respectif du rouleau (6, 7) de façon que, d'un côté de l'axe (8 ou 9), apparaisse la force de frottement correspondant à l'enroulement du câble et, de l'autre côté de l'axe, une force plus faible que la force de frottement, de telle sorte que l'axe (9) du rouleau enrouleur (7) tourne relativement fou et que l'axe (8) du rouleau dérouleur est freiné.

2. Mécanisme d'entraînement selon la revendication 1, caractérisé par le fait qu'au moins trois leviers (A, B, C ou D, E, Z) sont reliés entre eux, articulés en deux points d'articulation (G) mobiles, dont les deux leviers latéraux (A, B ou D, E) déviables possèdent chacun un point de pivotement fixe (F) et un levier intermédiaire (C ou Z) relie les leviers latéraux.

3. Mécanisme d'entraînement selon la revendication 2, caractérisé par le fait que la position du point d'articulation mobile (G) est choisie, par rapport au point de pivotement fixe (F), de façon que le rapport entre les déviations des leviers soit à peu près dans la zone de 1,0 à 2,5 et de préférence un peu plus grand que 1.

4. Mécanisme d'entraînement selon l'une des revendications 1 à 3, caractérisé par le fait qu'à chaque ensemble de leviers (A, B, C ou D, E, Z), est associé un ressort de traction ou de pression (16, 15) dont la force détermine la force minimale de frottement sur l'axe de rotation correspondant (8 ou 9).

5. Mécanisme d'entraînement selon l'une des revendications 1 à 3, caractérisé par le fait qu'entre les deux ensembles de leviers (A, B, C ou D, E, Z) est prévu un ressort de traction commun (16), dont la force détermine la force minimale de frottement sur l'axe de rotation correspondant (8 ou 9).

6. Mécanisme d'entraînement selon la revendication 2, caractérisé par le fait que les leviers (A, B, C ou D, E, Z) sont disposés sensiblement en forme de H (Fig. 1, Fig. 4) et les points de pivotement fixes (F) sont situés aux deux extrémités libres, situées côte à côte, des leviers latéraux déviables (A, B ou D, E).

7. Mécanisme d'entraînement selon la revendication 2, caractérisé par le fait que les leviers sont disposés à peu près en forme de U et les points de pivotement fixes (F) sont situés sensiblement sur un axe horizontal (Fig. 2) ou sur un angle de l'U et une extrémité de branche diagonalement opposée d'un levier latéral (Fig. 3).

FIG.1

FIG.4

FIG.2

FIG.3